(19) Europäisches Patentamt
European Patent Office
Office européen des brevets

(11) EP 3 837 314 B1

(12) EUROPEAN PATENT SPECIFICATION

(45) Date of publication and mention of the grant of the patent:
**10.07.2024 Bulletin 2024/28**

(21) Application number: **19749752.2**

(22) Date of filing: **12.08.2019**

(51) International Patent Classification (IPC):
***C08L 25/06*** $^{(2006.01)}$ ***C08L 51/04*** $^{(2006.01)}$
***C08J 9/00*** $^{(2006.01)}$

(52) Cooperative Patent Classification (CPC):
(C-Sets available)
**C08L 25/06; C08J 9/0061; C08J 9/122;**
**C08J 9/141; C08J 9/144; C08J 9/146;**
C08J 2203/06; C08J 2203/14; C08J 2203/142;
C08J 2325/06; C08J 2409/00; C08J 2425/04

(Cont.)

(86) International application number:
**PCT/EP2019/071543**

(87) International publication number:
**WO 2020/035434 (20.02.2020 Gazette 2020/08)**

# (54) EXPANDABLE VINYL AROMATIC POLYMER COMPOSITION WITH IMPROVED MECHANICAL AND INSULATING PROPERTIES

EXPANDIERBARE VINYLAROMATISCHE POLYMERZUSAMMENSETZUNG MIT VERBESSERTEN MECHANISCHEN UND ISOLIERENDEN EIGENSCHAFTEN

COMPOSITION DE POLYMÈRE AROMATIQUE DE VINYLE EXPANSIBLE PRÉSENTANT DES PROPRIÉTÉS MÉCANIQUES ET ISOLANTES AMÉLIORÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.08.2018 IT 201800008073**

(43) Date of publication of application:
**23.06.2021 Bulletin 2021/25**

(73) Proprietor: **Versalis S.p.A.**
**20097 San Donato Milanese (IT)**

(72) Inventors:
- **SONCIN, Emilj**
  **46100 MANTOVA (IT)**
- **GHIDONI, Dario**
  **46100 MANTOVA (IT)**
- **CASTIGLIONI, Andrea**
  **46100 MANTOVA (IT)**

(74) Representative: **Studio Torta S.p.A. et al**
**Via Viotti, 9**
**10121 Torino (IT)**

(56) References cited:
**EP-A1- 0 397 001**
**US-A- 4 207 402**
**US-A- 5 525 639**
**US-A- 5 661 191**
**US-A1- 2015 360 401**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 25/06, C08L 51/04, C08K 5/01**

## Description

Summary of the invention

The present invention relates to an expandable vinyl aromatic polymer composition with improved mechanical and insulating properties together with the process for its preparation, and manufactured articles obtainable from that composition.

Field of the invention

The present invention relates to an expandable vinyl aromatic polymer composition with improved mechanical and thermal insulation properties, the production process for its preparation it, as well as the manufactured articles that can be obtained from such composition.

The said compositions give high impact absorption strength, such as a "cushioning" effect, flexibility, excellent compression properties and softness to the touch, as well as good thermal insulation features, to the end manufactured articles containing them.

The main field of application of the compositions described and claimed is as flexible packaging material in both the food and industrial sectors, where a sense of softness to the touch, cushioning properties on impact and thermal insulation are required.

A balance between mechanical properties (flexibility), insulating capability, pleasantness (softness) to the touch and high degree of sintering that open up new market segments from which standard expandable polystyrene (EPS) is currently excluded is achieved with the composition according to this invention.

In the present patent application, all the operating conditions included in the text are to be considered to be preferred conditions, even if not expressly stated.

For the purposes of this description the term "comprises" or "includes" also comprises the term "consists of" or "essentially consists of".

For the purposes of this description, descriptions of ranges will always include the end members unless otherwise specified.

Expandable polymers are generally produced in the form of pearls or granules, which as a result of the action of heat, provided for example by steam, are first expanded to the desired density and then, after a particular ageing time, are sintered in closed moulds to produce blocks or the desired end products.

Expandable beads can be obtained by a process of batch polymerization in an aqueous suspension. This process, well known to those skilled in the art, includes the following stages:

- dispersing the liquid vinyl aromatic monomer in an aqueous medium using suspension agents;
- adding the polymerization catalysts and polymerizing the vinyl aromatic monomer in a stirred heated reactor;
- adding the expansion agent at a particular level of monomer conversion,
- completing polymerization;
- discharging, washing, drying and screening the resulting pearls. The diameter of the pearls generally varies between 0.1 and 3 mm.

A good quality product can be obtained through this suspension process, but it has several drawbacks, such as:

- a very broad size distribution for the pearls, whence the need to separate the different fractions by screening, with discard of the off-size products;
- significant limits to the production of special products, such as coloured pearls and/or pearls containing heterogeneous fillers or additives, for example nucleating agents and/or flame retardants, as they are difficult to incorporate into the pearls or may inhibit polymerization.

In the state of the art suitable compositions for forming packaging are prepared using very expensive processes - aqueous suspension or granulation followed by post-impregnation in aqueous suspension.

The aqueous suspension process produces batches of granules with a particular average diameter size ranging from the smallest fractions (0.1-0.3 mm) to the coarsest fractions (over 2 mm). Smaller fractions are used in the lost foam and moulding industries for both food and industrial packaging. Coarse fractions are used for thermal insulation. For flexible packaging, the application for products containing the compositions to which this patent application relates, only the fractions with weighted mean diameters between 0.4-0.6 mm, 0.6-0.9 mm, 0.9-1.2 mm and 1.2-1.6 mm are used, depending on the type of product.

The aqueous suspension process produces large quantities of unwanted fractions, even when sophisticated

technologies such as the use of Na sulfate and other additives are used to reduce particle size distribution. Fractions smaller or larger than the 0.4 to 1.6 mm fraction, inevitably produced with the suspension, cannot be used.

Granulation followed by post-impregnation is also expensive as penetration of the expansion agent into the center of the granule requires long impregnation cycles in the reactor. With the latter technology only the desired fraction of granules is prepared, but two plants are needed: a polymerization and granulation plant and a post-impregnation plant. This latter system is very similar to the suspension system, with the difference that granules instead of drops of styrene monomer are suspended. Impregnation with the expansion agent is therefore much more expensive because we already have a polymer granule that must be softened above the softening temperature or Tg (glass transition temperature), then made spherical and then impregnated. This stage is very critical because if the expansion agent does not reach the center of the granule the final foam will have a center which has expanded little or is sometimes still compact. The presence of this poorly expanded center causes the wires for cutting blocks to break, with consequent shutdown of the processing plant.

The Tg of a polymer material is defined as the temperature at which the second order transition between the solid and liquid state of a polymer composition occurs, as for example described in "Principles and applications of Thermal Analysis" by Paul Gabbott, Blackwell Publishing Ltd., 2008.

US 6,232,358 (published in 1999) discloses a styrene resin composition modified with rubber that is capable of providing a foam with a high expansion ratio, excellent impact resistance and flexibility and satisfactory appearance. As a method of preparation the document provides the example of granulation followed by post-impregnation, but the process is expensive because the styrene resin is first prepared, then extruded, then the granules are suspended in water and impregnated for 5 hours.

Penetration of the expansion agent to the center of the granule requires long impregnation cycles (5 hours) in the reactor. With this latter technology only the desired fraction is prepared, but two plants are required - the polymerization/granulation and the post-impregnation plants. Impregnation with expansion agent is therefore much more expensive because polymer granules which must be softened at a temperature higher than the Tg, then made spherical and then impregnated, are already available. This stage is very critical because if the expansion agent does not reach the center of the granules, the final expanded material will have a center that has expanded little or is sometimes still compact. The presence of this poorly expanded center causes the wires for cutting blocks to break, with consequent shutdown of the processing plant.

Another example of the same method of preparation is document EP 0722974 (published in 1996) which discloses expanded styrene beads modified with rubber, and articles of styrene resin modified with rubber.

A further example is document EP 1266929 (published in 2012) which discloses expandable polystyrene resin particles that are particles of expandable polystyrene resin (d) including modified polystyrene resin particles (c) containing an expansion agent (e), modified polystyrene resin particles (c) comprising a polystyrene resin and rubber polymer particles (b) dispersed in the resin, in which the rubber polymer particles (b) are uniformly dispersed in a continuous phase of the polystyrene resin or in a state in which the particle density (b) is higher in a central portion of the resin particle than in a portion of its surface layer, and the modified polystyrene resin particles (c) are modified polystyrene resin particles prepared by impregnating a mixture of monomers essentially comprising a styrene monomer and a conjugated diene monomer, and comprising the styrene monomer in a greater quantity than the conjugated diene monomer in the polystyrene resin particles (a), and the performance of copolymerization.

Another example is document DE 19710442 (published in 1998) which describes an expandable styrene polymer (I) containing:

(A) a polymer matrix comprising 70 to 95% by weight of polystyrene or a styrene copolymer containing up to 50% of co-monomers and 5 to 30% by weight of a styrene-butadiene block copolymer;
(B) 1-15% by weight (with respect to (A)) of a volatile expansion agent; and optionally (C) conventional additives.

By contrast, US 5,166,221 (EP 0425973 published in 1991) discloses expandable styrene polymers containing 10 to 90% by weight of a styrene-diene star-block copolymer containing 2 to 45% by weight of diene and 1 to 10% by weight of a C3-C6 hydrocarbon as an expansion agent can be processed to provide foams that have high resistance to aromatics. The document provides as an example a method of preparation that comprises polymerization in aqueous suspension, but large amounts of unwanted fractions are produced with this technology, even though sophisticated technologies are used to reduce the distribution (e.g. the use of Na sulfate and other additives). The smaller or larger fractions inevitably produced with the suspension cannot be used. Another example of polymerization in aqueous suspension is EP 0872513 (published in 1998) which describes a styrene polymer expandably modified with rubber (I) including:

(A) a continuous phase of polystyrene or a styrene co-monomer containing up to 50% by weight of co-monomer;
(B) 5-30% by weight (raw polymer mixture) of dispersed rubber particles and (C) 2-15 parts by weight (per 100%

parts by weight of polymer mixture) of a poorly binding expansion agent.

By contrast WO 1994/025516 (published in 1994) describes expanded particles for a styrene polymer modified with rubber comprising a plurality of closed cells defined by cell walls that form a matrix for the particles, in which each of the cell walls comprises two surfaces separated by a distance equal to the thickness of the cell wall. The method of preparation comprises extrusion with granulation in water.

One example of the same method of preparation is US document 3,558,534 (published in 1971) which describes expandable aromatic alkenyl polymers that do not acquire or retain a static charge and are prepared by incorporating a small amount of a rubbery polymer into the expandable polymer.

A further example is JP 2004115690 (published in 2004) which describes a method for manufacturing a good quality expandable particle that does not contain foam through using a styrene-type resin, in particular a recycled styrene-type resin product.

The technology of continuous bulk preparation (e.g. EP 1541621, published in 2005) according to the following steps is also known:

1. incorporating an expansion agent into a vinyl aromatic polymer containing rubber through a static or dynamic mixer;
2. cooling the molten polymer to 150-200°C;
3. discharging through a die plate with nozzles having a diameter of at least 1.5 mm;
4. granulating under water at a pressure between 5 and 20 bar.

## Detailed description of the invention

The object of the present invention is to prepare a vinyl aromatic polymer composition suitable for the preparation of flexible packaging.

In a preferred aspect of the present invention it is possible to prepare these compositions in a single stage using continuous bulk processing technology.

Thus the object of the present invention is an expandable vinyl aromatic polymer composition with improved mechanical and insulating properties comprising:

a) from 67% to 88% by weight of a vinyl aromatic polymer (a);
b) from 3% to 8% by weight of an expansion agent (b);
c) from 9% to 25% by weight of a vinyl aromatic copolymer (c) containing from 3% to 9% by weight of a rubbery component as a dispersed phase;

with the condition that the sum of (a), (b) and (c) is 100% by weight.

The term "comprising" and its derivatives is not intended to exclude the presence of any additional components, stages or procedures, whether or not they are disclosed in this text. To avoid any doubt, all compositions claimed in this text through the use of the term "comprising" may include any additive, coadijuvant or other additional compounds, of the polymer or other type, unless indicated otherwise.

Further objects and advantages of the present invention will be more clearly apparent from the following description, provided purely by way of example and not limited thereto, which illustrates preferred embodiments of the present invention.

Figure 1 illustrates the cushioning tests referring to the examples of the invention and the comparative examples.

The property of cushioning a package expresses its ability to absorb energy following an impact. Performance is expressed in terms of an "impact factor" (maximum deceleration expressed in multiples of the acceleration due to gravity g (in $m/s^2$) following impact as a function of the "static stress" (force per unit area in KPa).

For the purposes of this invention vinyl aromatic polymer (a) will mean a polymer obtained from at least 65% by weight of a vinyl aromatic monomer.

The vinyl aromatic monomers that can be used to prepare the vinyl aromatic polymer (a) used in the compositions described and claimed in the present invention have the general formula (I):

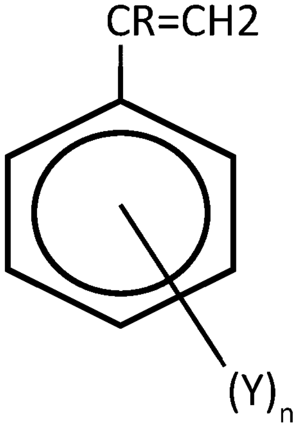

(I)

In formula (I) R is hydrogen or a methyl group; n is zero or an integer ranging from 1 to 3, Y is selected from a halogen, preferably chlorine or bromine, a chloromethyl, an alkyl group or an alkoxyl group having 1 to 3 carbon atoms.

Preferred vinyl aromatic monomers having formula (I) are selected from styrene, α-methylstyrene, methylstyrene, ethylstyrene, vinyltoluene isomers, ethylstyrene isomers, propylstyrene isomers, chlorostyrene isomers, methylchlorostyrene isomers, methoxystyrene isomers, acetoxystyrene isomers, hydroxystyrene isomers, methylhydroxystyrene isomers, and mixtures thereof. More preferably styrene and α-methylstyrene may be selected from these vinyl aromatic monomers. Styrene is the predominant vinyl aromatic monomer and is preferably at least 50% of the mixture of vinyl aromatic monomers used to prepare vinyl aromatic polymer (a), more preferably at least 75%, even more preferably at least 85%. The other preferred co-monomer is α-methylstyrene.

Vinyl aromatic monomers of general formula (I) may be used alone, in a mixture or in a mixture of up to 35% by weight of other copolymerizable vinyl monomers.

Preferred copolymerizable vinyl monomers are selected from among (meth)acrylic acid, maleic anhydride, alkyl esters of (meth)acrylic acid having from 1 to 18 carbon atoms, amides and nitriles of (meth)acrylic acid. Among said (meth)acrylic acid esters those preferred are compounds selected from among ethyl acrylate, methyl methacrylate, butyl acrylate, 2-ethylhexyl acrylate, dodecyl acrylate, dodecyl methacrylate, stearyl acrylate, stearyl methacrylate, glycidyl methacrylate, ethylene glycol dimethacrylate, and their mixtures.

Among said (meth)acrylic acid nitriles those preferred are compounds selected from among acrylamide, methacrylamide, dimethylaminoethyl methacrylate, acrylonitrile, methacrylonitrile. Other copolymerizable vinyl co-monomers may be butadiene and divinyl benzene.

The weight average molecular weight MW of the polymer and/or copolymer (a) measured by the Gel Permeation Chromatography (GPC) technique described in the Experimental Part (ASTM method D5296-11 GPC PS) is between 90 kDa and 300 kDa.

MW below 90 kDa give a too high fluidity which causes the pearls to collapse during the expansion process. MW over 300 kDa give an insufficient expansion rate and an unsuitable final density for the foamed part.

Compositions according to the present invention include a quantity of vinyl aromatic polymer (a) from 67 to 88% by weight, more preferably from 69 to 83% by weight, compared to the sum of (a), (b) and (c) as defined above.

For the purposes of this invention vinyl aromatic copolymer (c) is defined as a copolymer produced from at least one vinyl aromatic monomer, as defined above, containing a rubbery component as a dispersed phase.

Some examples of vinyl aromatic copolymer (c) are "Edistir®850E", "Edistir®ICE R830D", "Edistir®RC600", produced and marketed by Versalis s.p.a.

The rubbery component used in vinyl aromatic copolymer (c) may be selected from polybutadiene, polyisoprene, butadiene and/or isoprene copolymers with styrene or with other vinyl monomers.

Some examples of suitable rubbery components are polybutadiene, such as "Intene® 40", "Intene® 50" and "Intene® 60", produced and marketed by Versalis s.p.a. Alternatively, there are also styrene-diene block copolymers available on the market, such as "SOLPRENE® 1205", "SOLPRENE® S1430", "SOLPRENE® 308" and "SOLPRENE® 314" produced and marketed by Dynasol, or "Europrene® SOL B 183", produced and marketed by Versalis s.p.a.

Copolymer (c) can be prepared according to any known suspension, mass-suspension or continuous bulk polymerization process.

If not already specified, the amount of dispersed polybutadiene may be conveniently determined using the iodometric titration method described below in the Experimental Part.

In a preferred aspect of the present invention vinyl aromatic copolymer (c) is prepared by pre-polymerization of the vinyl aromatic monomer in the presence of suitable free-radical initiators and the rubbery component in a first

reactor until a conversion of less than 50% by weight of the monomers fed is achieved. Subsequently polymerization is completed in one or more successive reactors until the monomers are completely polymerized. The resulting polymer is then devolatilized and granulated.

Compositions according to the present invention comprise a quantity of vinyl aromatic copolymer (c) from 9 to 25% by weight, more preferably from 13 to 24% by weight, even more preferably from 15 to 25% by weight and yet more preferably from 17 to 22% by weight in comparison to the sum of (a), (b) and (c) as defined above.

The rubbery component dispersed in vinyl aromatic copolymer (c) varies between 3 and 9% by weight, more preferably between 4 and 9% by weight, yet more preferably between 5 and 9% by weight, even more preferably between 6 and 8.5% by weight and yet even more preferably between 7 and 8.5% by weight.

It follows, therefore, that, as shown in the Examples, if copolymer (c) is present in a quantity of 15%, 20%, 25% by weight of the sum of (a), (b) and (c) as defined above, the rubbery component present in a quantity of 7%, 7.5%, 8.5% will have the following values with respect to the sum of (a), (b) and (c) as defined above.

| Example | % polymer (c) with respect to the sum of (a), (b) and (c) | PB% in polymer (c) | PB% with respect to the sum of (a), (b) and (c) |
|---|---|---|---|
| **Ex. 1** | 20 | 7 | 1.4 |
| **Ex. 2** | 25 | 7 | 1.75 |
| **Ex. 3** | 15 | 7 | 1.05 |
| **Ex. 4** | 20 | 8.5 | 1.7 |
| **Ex. 5** | 20 | 7.5 | 1.5 |
| **Ex. 8** | 9 | 7.5 | 0.675 |

In a preferred aspect of the present invention the rubbery component dispersed in vinyl aromatic copolymer (c) is polybutadiene (PB) and/or styrene-diene block copolymers. Compositions according to the present invention include from 3% to 8% by weight of at least one expansion agent (b).

Any expansion agent that can be incorporated into a polymer can be used in the compositions to which this invention relates.

Preferably expansion agents may be liquid substances with a boiling point varying between 10°C and 100°C at atmospheric pressure; preferably between 20°C and 60°C. Expansion agents that may be used in this invention are selected from aliphatic or cycloaliphatic hydrocarbons containing from 3 to 6 carbon atoms; for example, n-pentane, iso-pentane, cyclopentane, butane, isobutane and their mixtures; or halogenated derivatives of aliphatic hydrocarbons containing 1 to 3 carbon atoms, such as dichlorodifluoromethane, 1,2,2-trifluoroethane and 1,1,2-trifluoroethane; or carbon dioxide.

Compositions according to the present invention include a quantity of expansion agent (b) from 3 to 8% by weight, more preferably from 4 to 7% by weight with respect to the sum of (a), (b) and (c) as defined above.

In order to encourage retention of the expansion agent in polymer matrix (a), additives that can form weak bonds with the expansion agent (e.g. hydrogen bonds) or strong bonds (e.g. acid-base adducts) may be used. Preferably these additives are selected from methyl alcohol, isopropyl alcohol, dimethyl carbonate, or derivatives containing an amine group. Additional additives (generally introduced in conventional vinyl aromatic polymers) such as nucleating agents, for example polyethylene waxes or talc, antioxidants, pigments, stabilizers, antistatic agents and release agents, may be added to the compositions according to the present invention.

In a preferred aspect of the present invention the polymer compositions comprise:

a) 69 to 83% by weight of a vinyl aromatic polymer (a);
b) 4% to 7% by weight of an expansion agent (b);
c) 13% to 24% by weight of a vinyl aromatic copolymer (c) containing 3% to 9% of a rubbery component as a dispersed phase;

with the condition that the sum of (a), (b) and (c) is 100% by weight.

In another preferred aspect of the present invention the polymer compositions comprise:

a) 69 to 81% by weight of polystyrene;
b) 4% to 6% by weight of an expansion agent (b);
c) 15 to 25% by weight of a copolymer consisting of impact-resistant polystyrene containing 4 to 9% by weight of a

rubbery component;

with the condition that the sum of (a), (b) and (c) is 100% by weight.

In yet another preferred aspect of the present invention the polymer compositions comprise:

a) 72 to 79% by weight of polystyrene;
b) 4% to 6% by weight of a mixture of expansion agents (b);
c) 17 to 22% by weight of a copolymer consisting of an impact-resistant polystyrene containing 7 to 8.5% by weight of a rubbery component

with the condition that the sum of (a), (b) and (c) is 100% by weight.

The polymer compositions according to the present invention may be prepared according to methods known in the art.

In one aspect of the present invention the polymer compositions according to the present invention are conveniently prepared by a continuous bulk process comprising the following stages in sequence:

i. mixing vinyl aromatic polymer (a) as defined above and vinyl aromatic copolymer (c) as granules, powder or already melted,
ii. if necessary, if not already melted, bringing the polymer mixture to a temperature above or equal to the melting point of vinyl aromatic polymer (a) and copolymer (c);
iii. incorporating at least one expansion agent (b) into the molten polymer mixture forming the vinylaromatic polymer composition according to the present invention;
iv. mixing the polymer composition thus obtained by means of static or dynamic mixing elements;
v. sending the polymer composition thus obtained after mixing to a pressurized cutting die plate.

One cutting die plate used is for example that described in US 7,320,585 with a cutting system of the "Spraying Nozzles System" type. The expandable granules/pearls to which this invention relates can also be produced with a different type of die plate where the polymer is cut in a granulation chamber full of water, a system known as "underwater" cutting. In this case the polymer remains completely immersed in water during the cutting stage, and the water pressure in the granulation chamber is over 300 KPa.

At the end of the continuous bulk process the final compositions according to the present invention obtained are in the form of spheroidal-shaped polymer granules with different average diameters that can be used according to the nature of the individual manufactured article, and conveniently of between 0.4-0.6 mm, 0.6-0.9 mm, 0.9-1.2 mm and 1.2-1.6 mm.

A number of demonstration examples are provided below for a better understanding of the invention and its scope of application. These examples do not in any way constitute a limitation of the scope of the present invention.

EXPERIMENTAL PART

Determination of molecular weight (MW) and molecular weight distribution (MWD) by GPC.

The compositions according to the present invention have a weight average molecular weight (MW) of between 90 and 300 kDalton, measured by high performance molecular size-exclusion chromatography according to ASTM D5296 - 11, and have a fluidity index (Melt Flow Index MFI at 200°C, 5kg) of between 2.5 and 50.

The flow index is measured according to ISO 1133, fourth edition, 2005.

Molecular weight distribution is measured by high performance molecular size-exclusion chromatography according to ASTM D5296-11 using a refractive index detector (RID), and is performed on the polymer after separation from the dry residue and subsequent precipitation.

Determination of polybutadiene content by iodometric titration

The iodometric titration is performed using the 785 DMP Titrino Metrohm Titrator according to this method.

(a) Blank analysis as follows

1) Preparation (time 15 min)
Add 20 ml of $CHCl_3$ and a magnetic stirrer to a 100 ml Erlenmeyer flask.
2) Addition of Wijs reagent (time 15 min)

Add 2.5 ml of Wijs Reagent using the titrator.
Fill the neck with Potassium Iodide and shake on a rotating plate for 10 min, possibly in the dark.

3) Determination (time 15 min)

Remove the cap to allow the Potassium Iodide to enter, mix and add $H_2O$.
Titrate against Sodium Thiosulfate with strong stirring.
To start the titration press START, enter the value of the aliquot of Wijs reagent added to the blank and change the unit of measurement from grams to ml.
Determine Vb = ml of thiosulfate solution used for the blank test

(b) Sample analysis

1) Preparation (time 25 min)

Weigh about 0.25 g of vinyl aromatic copolymer (c) and about 0.05 g (polybutadiene) into a 100 ml Erlenmeyer flask, recording P = polymer sample weight (g).
Add 20 ml of $CHCl_3$ and a magnetic stirrer.
Place the Erlenmeyer flask on a rotating plate to dissolve the polymer (~20 min).

2) Addition of Wijs reagent (time 20 min)

Add 5 ml of Wijs Reagent using the titrator.
Fill the neck with Potassium Iodide and shake on a rotating plate for 15 min, possibly in the dark.

3) Determination (time 15 min)

Remove the cap to allow the Potassium Iodide to enter, mix and add $H_2O$. Titrate against Sodium Thiosulfate with strong stirring.
To start titrating, press START, enter the sample name (ID 1), the value of the added aliquot of Wijs reagent (ID 2), and the sample weight.
Determine Vc = ml of thiosulfate solution used for the sample.

Expression of the result (% of PB)

$$\%PBu(p/p) = \frac{(V_b - V_c) \cdot N_{S_2O_3^{2-}} \cdot PE_{PBu}}{1000} \cdot \frac{100}{p}$$

Where:

*$V_b$ = ml of thiosulfate solution used for blank test*
*$V_c$ = ml of thiosulfate solution used for the sample*
$N_{S_2O_3^{2-}} = normality\ of\ thiosulfate\ solution$ (0.1*N*)
*$PE_{PBu}$ = equivalent weight of polybutadiene* ( $\frac{PM}{2} = \frac{54.092}{2} = 27.046$ )
*p = weighing polymeric sample* (*gr*)

EXAMPLE 1

Preparation of a composition by a continuous bulk process

In a stirred reactor, 90 parts of ethyl benzene and 910 parts of styrene were fed for a total of 1000 parts. The reaction was conducted at 125°C with an average residence time of 2 hours. The fluid composition from the outlet was

then fed to a second reactor where the reaction was completed at 135°C with an average residence time of 2 hours.

The reactive polymer composition, with 72% conversion, was heated to 240°C and then fed to the diverter to remove the solvent and residual monomer.

The resulting composition had a glass transition temperature of 101°C, a melt flow index (MFI 200°C, 5kg) of 5 g/10 min, a molecular weight MW of 210000 g/mol and a MW/Mn ratio of 2.2, where MW is the weight average molecular weight and Mn is the number average molecular weight. The vinyl aromatic composition was fed to a heat exchanger to lower its temperature to 200°C (component (a) of the invention).

200 parts of impact-resistant polystyrene (HIPS, High Impact Polystyrene) with 7% polybutadiene determined iodometrically (commercially available, Edistir® 850E, Versalis spa), as vinyl aromatic copolymer (c) were fed to an extruder. A gear pump increased the feed pressure of the plasticized HIPS to 260 bar absolute: 60 parts of a mixture of n-pentane (70%) and iso-pentane (30%), expansion agent (b), and 750 parts of the vinyl aromatic composition (a) from the heat exchanger were then added. The ingredients were then mixed with static mixing elements for an average calculated (residence) time of 7 minutes.

The final composition contained 20% by weight of copolymer (c) with 7% polybutadiene, 6% by weight of a mixture of n-pentane (70%) and iso-pentane (30%), (component (b)) and 74% by weight of polystyrene (component (a)). The quantity of polybutadiene therefore corresponded to 1.4% by weight of the total composition.

The composition was then delivered to the die plate, where it was extruded through a number of holes with a diameter of 0.6 mm, immediately cooled with a jet of water and cut with a series of rotating knives (as described in US 2005/0123638). The granulation pressure was 500 KPa absolute and the shear displacement rate was selected so as to obtain granules with an average diameter of 1.1 mm. Water was used as a spray liquid and nitrogen as a carrier gas. The water temperature was 45°C.

The resulting granulated beads were dried with a centrifugal dryer and then coated. The coating was prepared by adding 1 part of glyceryl monostearate, 1 part of glyceryl tristearate, 1 part of zinc stearate per 1000 parts of dried granulated pearls. The coating additives were mixed with the granulate by means of a continuous screw mixer. The size of the expandable granules subjected to the expansion process, understood as the weighted mean diameter, was between 0.9 and 1.2 mm.

The product was pre-expanded in a discontinuous pre-expander produced by the AMD company, model P125 D (usable volume at level: 125 liters), using steam at a temperature of 100°C. The vapour pressure used for pre-expansion of the polymer granules was set to 1.1 bar absolute (110 KPa). The amount of expandable granules fed to the pre-expander was 1000g. The expanded pearls were left to mature for 12 hours and then used to mold blocks (size 1040x1030x550 mm).

Some slabs obtained from the block of expanded material were put into a stove at 70°C for 3 days (residual pentane less than 0.15%): samples for bending, compressive, cushioning and thermal conductivity tests were then obtained.

The thermal conductivity at 15.8 g/l measured according to ISO 8301 (1991) was 36.7 mW/mK.

The bending force, measured at 30 mm (5% deformation) according to ISO 1209-2, was 209 KPa (specimen size - 350×100×25 mm).

Compressive stress at 10%, according to ISO 844 (2007) was 110 KPa at 17.4 g/l (specimen size = 50x50x50 mm).

The density of the expanded slabs was 18.0 g/l and sintering was 90% (number of fractured pearls per 100 examined).

The cushioning tests were carried out according to ISO 4651 (1988). Figure 1 shows the maximum deceleration values expressed as multiples of the acceleration due to gravity (g in $m/s^2$) as a function of the force applied in KPa.

This composition had an excellent balance of mechanical properties (both bending and compression and cushioning), sintering and thermal insulation.

EXAMPLE 2

Preparation of a composition by a continuous bulk process

Example 1 was repeated using 25% of copolymer (c).

The final composition contained 25% by weight of copolymer (c), 7% polybutadiene, 5% by weight of a mixture of n-pentane (70%) and iso-pentane (30%), (component (b)) and 70% by weight of polystyrene (component (a)). The quantity of polybutadiene therefore corresponded to 1.75% by weight of the total composition.

The thermal conductivity was 38 mW/mK at 16.50 g/l. The compressive stress at 10% was 100 KPa. The bending force, measured at 30 mm (5% deformation) was 204 KPa. The density of the expanded sheets was 18.0 g/l and sintering was 80%.

EXAMPLE 3

Preparation of a composition by a continuous bulk process

Example 1 was repeated using 15% of copolymer (c).

The final composition contained 15% by weight of copolymer (c), 7% polybutadiene, 6% by weight of a mixture of n-pentane (70%) and iso-pentane (30%), (component (b)) and 79% by weight of polystyrene (component (a)). The quantity of polybutadiene therefore corresponded to 1.05% by weight of the total composition.

The thermal conductivity was 36 mW/mK at 16.40 g/l. The compressive stress at 10% was 110 KPa.

The bending force, measured at 30 mm (5% deformation) was 215 KPa. The density of the expanded sheets was 18.2 g/l and the sintering 85%.

EXAMPLE 4

Preparation of a composition by a continuous bulk process

Example 1 was repeated using a different copolymer (c), i.e. impact resistant polystyrene with 8.5% polybutadiene (PB) determined by the iodometric method (commercially available, Edistir® ICE R830D, Versalis spa).

At the end of the process as described in Example 1 a composition with the same percentage values was obtained, but the copolymer c) used in this example had a higher percentage of polybutadiene, 8.5% instead of 7%. The quantity of polybutadiene therefore corresponded to 1.7% by weight of the total composition.

Thermal conductivity was 34.8 mW/mK at 16.5 g/l. The bending force, measured at 30 mm (5% deformation) was 198 KPa. The compressive stress at 10% was 99.5 KPa. The density of the expanded sheets was 18.3 g/l and sintering 85%.

EXAMPLE 5

Preparation of a composition by a continuous bulk process

Example 1 was repeated using an impact resistant polystyrene with 7.5% PB determined by the iodometric method (commercially available, Edistir®RC600, Versalis spa). In this case the quantity of component (b) was 4.7%.

At the end of the process as described in Example 1 a composition was obtained with the same percentage values of copolymer (c), but the copolymer c) used in this example had a higher percentage of polybutadiene, 7.5% instead of 7%. The quantity of polybutadiene therefore corresponded to 1.5% by weight of the total composition.

The thermal conductivity was 35 mW/mK at 15.60 g/l. The bending force, measured at 30 mm (5% deformation), was 191 KPa. The compressive stress at 10% was 90 KPa. The density of the expanded sheets was 18.0 g/l and sintering 80%. The cushioning tests are reported in Figure 1.

EXAMPLE 6

Preparation of a composition by a suspension process

A mixture of 150 parts by weight of water, 0.2 parts of sodium pyrophosphate, 80 parts of styrene, 0.25 parts of t-butylperoxy-2-ethylhexanoate, 0.25 parts of t-butyl perbenzoate and 20 parts of copolymer (c) used in Example 1 were loaded into a sealed stirred vessel. The batch was heated to 90°C with stirring. After about 2 hours at 90°C, 4 parts of a 10% solution of polyvinylpyrrolidone were added. Always with stirring, it was heated for another 2 hours at 100°C; 7 parts of a 70/30 mixture of n-pentane and i-pentane were added, it was heated for another 4 hours at 125°C, then cooled down and discharged. The expanded polymer granules thus produced contained 20% of copolymer (c) with 7% polybutadiene, 6% of a mixture of n-pentane (70%) and iso-pentane (30%) (component b) and 74% polystyrene (component a).

The granules were then recovered and washed with demineralised water containing 0.05% of a non-ionic surfactant consisting of a fatty alcohol condensed with ethylene oxide and propylene oxide, sold by Huntsman under the trade name Empilan 2638. The granules were then dried in a lukewarm stream of air, 0.02% of a non-ionic surfactant consisting of a condensate of ethylene oxide and propylene oxide based on glycerine, sold by Dow (Voranol CP4755), was added and the granules were then screened by separating out the fraction with a diameter of between 0.9 and 1.2 mm.

This fraction accounted for 50%, 20% being the fraction between 0.4 and 0.9 mm, 5% the fraction between 0.2 and 0.4 mm and 25% the coarse fraction between 1.5 and 3 mm. The same coating as in Example 1 was then added to the fraction between 0.9 and 1.2 mm. The product was pre-expanded, moulded and characterized in the same way

as in Example 1. The thermal conductivity was 37.5 mW/mK at 15.9 g/l. The bending force, always measured at 30 mm (5% deformation), was 205 KPa. The compressive stress, again at 10%, was 100 KPa. The density of the expanded slabs was 18.3 g/l and sintering 80%.

As may be seen, both mechanical properties and conductivity are comparable with those in Example 1 but the useful fraction (0.9-1.2 mm) was only 50%. The yield was only 50%, the rest being waste.

Example 7 (comparison)

Preparation of a comparative composition containing 94% of polymer (c)

940 parts of a vinyl aromatic composition of Edistir® R850 E (used in Example 1 above) originating from the polymerization section were placed in a heated vessel and fed to a heat exchanger to lower its temperature to 200°C.

A gear pump increased the feed pressure of the plasticized HIPS to 260 bar: 60 parts of a mixture of n-pentane (70%) and iso-pentane (30%) were then added, as in Example 1. The composition was then mixed by means of static mixing elements for a calculated average (residence) time of 7 minutes. The composition was then distributed in the system, where it was extruded through a number of holes with a diameter of 0.6 mm, immediately cooled with a jet of water and cut with a series of rotating knives in the same way as in Example 1.

The quantity of polybutadiene therefore corresponded to 6.58% by weight of the total composition, since polymer (c) was the only constituent of the composition.

The product was pre-expanded, moulded and characterized in the same way as in Example 1.

The thermal conductivity was 39 mW/mK at 16 g/l. The bending force, always measured at 30 mm (5% deformation), was 180 KPa.

The compressive stress, again at 10%, was 70 KPa. The density of the expanded slabs was 18.1 g/l and sintering 60%. The cushioning tests are reported in Figure 1.

EXAMPLE 8

Preparation of a composition by a continuous bulk process

Example 5 was repeated using 9% copolymer (c) or Edistir®RC600. The final composition contained 9% by weight of copolymer c) with 7.5% polybutadiene, 5% by weight of pentane (component (b)) as a mixture of n-pentane (70%) and iso-pentane (30%), and 86% by weight of polystyrene (component (a)). The quantity of polybutadiene therefore corresponded to 0.675% by weight of the total composition.

Thermal conductivity was 34.1 mW/mK at 18.1 g/l. The bending force, measured at 30 mm (5% deformation), was 234 KPa. Compressive stress at 10% was 112 KPa. The density of the expanded slabs was 18.0 g/l and sintering 75%. The cushioning tests are reported in Figure 1.

EXAMPLE 9 (comparison)

Preparation of a composition by a continuous bulk process

90 parts of ethyl benzene and 910 parts of styrene for a total of 1000 parts were fed to a stirred reactor. The reaction was conducted at 125°C with an average residence time of 2 hours. The fluid composition from the outlet was then fed to a second reactor where the reaction was completed at 135°C with an average residence time of 2 hours.

The reactive polymer composition, with a conversion of 72%, was heated to 240°C and then fed to the devolatiliser to remove the solvent and residual monomer.

The resulting composition had a glass transition temperature of 101°C, a melt flow index (MFI 200°C, 5kg) of 5.3 g/10 min, a molecular weight MW of 208000 g/mol and a MW/Mn ratio of 2.2, where MW is the weight average mean molecular weight and Mn is the number average molecular weight. The vinyl aromatic composition was fed to a heat exchanger to lower its temperature to 200°C (component (a) of the invention). A gear pump increased the pressure of component feed (a); 60 parts of a mixture (component (b)) of n-pentane (70%) and iso-pentane (30%) were then added, as in Example 1. The ingredients were then mixed by means of static mixing elements for an average calculated (residence) time of 7 minutes. The final composition contained 6% by weight of a mixture of pentane (component (b)) and 94% by weight of polystyrene (component (a)). The quantity of polybutadiene therefore corresponded to 0% by weight of the total composition.

The product was pre-expanded, moulded and characterized in the same way as in Example 1.

Thermal conductivity was 38.6 mW/mK at 17.2 g/l. In the bending stress test the sample did not reach 30 mm (corresponding to 5% deformation) but broke earlier, at 20.7 mm. The compressive stress, again at 10%, was 75 KPa.

The density of the expanded slabs was 18.2 g/l and sintering 25%.

Analysis Figure 1

As may be seen from Figure 1, the cushioning curves for Example 1 and Example 8 are almost identical to that of comparison Example 7 despite the different content of rubbery component in the total composition (1.4% in Example 1 and 0.675% in Example 8 against 6.58% in comparison Example 7). It should not be forgotten that the property of cushioning a package expresses its ability to absorb energy after impact as a function of the static stress applied (force per unit area). This capacity is measured with the impact factor expressed in multiples of the earth's acceleration g and is the deceleration caused by the product's absorption of the impact energy.

The sintering values in Examples 1, 2, 3, 4, 5, 6 and 8 are higher than those for comparison Examples 7 (6.58% rubbery component) and 9 (0% rubbery component). The thermal conductivity values for Examples 1, 2, 3, 4, 5, 6 and 8 are higher than those for comparison Examples 7 (6.58% rubbery component) and 9 (0% rubbery component). The bending behaviour of Examples 1, 2, 3, 4, 5, 6, 7 and 8 is better than that of Example 9 (0% rubbery component).

The compressive behaviour of Examples 1, 2, 3, 4, 5, 6 and 8 is better than that of comparison Examples 7 (6.58% rubbery component) and 9 (0% rubbery component).

TABLE 1

| Example | Polymer (c) | % polymer (c) | PB % in polymer (c) | PB % of total | Thermal conductivity (mW/mK) | Compressive stress - 10% deformation (KPa) | Sintering (number of fractured pearls per 100 examined) | Bending force at 30 mm (KPa) |
|---|---|---|---|---|---|---|---|---|
| **Ex. 1** | Edistir R850E | 20 | 7 | 1.4 | 36.7 | 110 | 90 | 209 |
| **Ex. 2** | Edistir R850E | 25 | 7 | 1.75 | 38 | 100 | 80 | 204 |
| **Ex.. 3** | Edistir R850E | 15 | 7 | 1.05 | 36 | 110 | 85 | 215 |
| **Ex. 4** | Edistir R830D | 20 | 8.5 | 1.7 | 34.8 | 99.5 | 85 | 198 |
| **Ex. 5** | Edistir RC600 | 20 | 7.5 | 1.5 | 35 | 90 | 80 | 191 |
| **Ex. 6** | Edistir R850E suspensi on | 20 | 7 | 1.4 | 37.5 | 100 | 80 | 205 |
| **Ex. 7 (comparison)** | Edistir R850E | 94 | 7 | 6.58 | 39 | 70 | 60 | 180 |
| **Ex.8** | Edistir RC600 | 9 | 7.5 | 0.675 | 34.1 | 112 | 75 | 234 |
| **Ex. 9 comparison)** | - | - | - | - | 38.6 | 75 | 25 | fractu red |

## Claims

1. An expandable vinyl aromatic polymer composition comprising:

   a) from 67% to 88% by weight of a vinyl aromatic polymer (a);
   b) from 3% to 8% by weight of an expansion agent (b);
   c) from 9 to 25% by weight of a vinyl aromatic copolymer (c) containing as dispersed phase from 3 to 9% by weight of a rubbery component;

   with the condition that the sum of (a), (b) and (c) is 100% by weight.

2. The composition according to claim 1, wherein the vinyl aromatic polymer (a) is a polymer obtained from at least 65% by weight of a vinyl aromatic monomer.

3. The composition according to either of claims 1-2, wherein the vinyl aromatic monomers used to prepare the vinyl aromatic polymer (a) have the general formula (I):

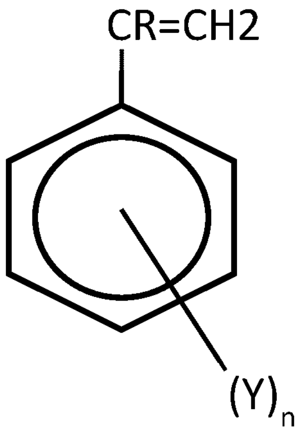

(I)

   in which

   R is hydrogen or a methyl group;
   n is zero or an integer ranging from 1 to 3;
   Y is selected from a halogen, preferably chlorine or bromine, a chloromethyl, an alkyl group or an alkoxy group having from 1 to 3 carbon atoms.

4. The composition according to claim 3, wherein the vinyl aromatic monomers of formula (I) are selected from styrene, α-methyl styrene, methyl-styrene, ethylstyrene, vinyl toluene isomers, ethyl styrene isomers, propyl styrene isomers, chlorostyrene isomers, methylchlorostyrene isomers, methoxystyrene isomers, acetoxystyrene isomers, hydroxystyrene isomers, methylhydroxystyrene isomers, and mixtures thereof.

5. The composition according to claim 3 or 4, wherein the vinyl aromatic monomers of general formula (I) can be used alone, in a mixture or in mixture up to 35% by weight with other copolymerizable vinyl monomers selected from (meth)acrylic acid, maleic anhydride, alkyl esters of (meth)acrylic acid having from 1 to 18 carbon atoms, amides and nitriles of (meth)acrylic acid.

6. The composition according to claim 4, wherein the vinyl aromatic monomer is styrene.

7. The composition according to claim 6, wherein the styrene is at least 85% of the mixture of vinyl aromatic monomers used to prepare the vinyl aromatic polymer (a).

8. The composition according to any one of claims 3-6, wherein the vinyl aromatic copolymer (c) is a copolymer produced from at least one vinyl aromatic monomer as defined in claim 3 containing, as a dispersed phase, a rubbery component selected from polybutadiene, poly-isoprene, copolymers of butadiene and/or isoprene with styrene or other vinyl monomers.

**9.** The composition according to any one of claims 1-8, wherein the rubbery component dispersed in the vinyl aromatic copolymer (C) is polybutadiene (PB) and/or styrene-diene block copolymers.

**10.** The composition according to any one of claims 1-9, wherein the expansion agent (b) is present in an amount of from 4 to 7% by weight.

**11.** The composition according to any one of claims 1-10, wherein the expansion agent (b) is selected from aliphatic or cyclo-aliphatic hydrocarbons containing from 3 to 6 carbon atoms, such as n-pentane, iso-pentane, cyclopentane, butane, isobutane and their mixtures; or the halogenated derivatives of aliphatic hydrocarbons containing from 1 to 3 carbon atoms, such as dichlorodifluoromethane, 1,2,2-trifluoroethane and 1,1,2-trifluoroethane; or carbon dioxide.

**12.** The composition according to any one of claims 1-11, comprising:

a) from 69 to 83% by weight of a vinyl aromatic polymer (a);
b) from 4% to 7% by weight of an expansion agent (b);
c) from 13% to 24% by weight of a vinyl aromatic copolymer (c) containing from 3% to 9% of a rubbery component as a dispersed phase;

with the condition that the sum of (a), (b) and (c) is 100% by weight.

**13.** The composition according to claim 12, consisting of:

a) from 69 to 81% by weight of polystyrene;
b) from 4% to 6% by weight of an expansion agent (b);
c) from 15 to 25% by weight of a copolymer made of impact-resistant polystyrene containing from 4 to 9% by weight of polybutadiene;

with the condition that the sum of (a), (b) and (c) is 100% by weight.

**14.** The composition according to claim 12, consisting of:

a) from 72 to 79% by weight of polystyrene;
b) from 4% to 6% by weight of an expansion agent (b);
c) from 17 to 22% by weight of a copolymer made of impact-resistant polystyrene containing from 7 to 8.5% by weight of polybutadiene;

with the condition that the sum of (a), (b) and (c) is 100% by weight.

**15.** Continuous bulk process for preparing the compositions according to any one of claims from 1 to 14, which comprises the following stages in sequence:

i. mixing vinyl aromatic polymer (a) and the vinyl aromatic copolymer (c) in the form of granules, powder or already in the molten state,
ii. if necessary, if not already in the molten state, bringing the polymer mixture to a temperature above or equal to the melting point of vinyl aromatic polymer (a) and copolymer (c);
iii. incorporating at least one expansion agent (b) in the melted polymer mixture, forming the vinyl aromatic polymer composition in claim 1;
iv. mixing the polymer composition thus obtained by means of static or dynamic mixing elements;
v. sending the polymer composition thus obtained after mixing to a pressurized cutting die plate.

**16.** An expanded article comprising the composition according to any one of claims 1 to 14.

**Patentansprüche**

**1.** Expandierbare vinylaromatische Polymerzusammensetzung, aufweisend:

a) 67 bis 88 Gew.-% eines vinylaromatischen Polymers (a);

b) von 3 bis 8 Gew.-% eines Expansionsmittels (b);
c) 9 bis 25 Gew.-% eines vinylaromatischen Copolymers (c), das als dispergierte Phase 3 bis 9 Gew.-% einer kautschukartigen Komponente enthält;

unter der Bedingung, dass die Summe aus a), b) und c) 100 Gewichtsprozent beträgt.

**2.** Zusammensetzung nach Anspruch 1, wobei das vinylaromatische Polymer (a) ein Polymer ist, das aus zumindest 65 Gew.-% eines vinylaromatischen Monomers erhalten wird.

**3.** Zusammensetzung nach einem der Ansprüche 1 bis 3, wobei die zur Herstellung des vinylaromatischen Polymers (a) verwendeten vinylaromatischen Monomere die allgemeine Formel (1) haben:

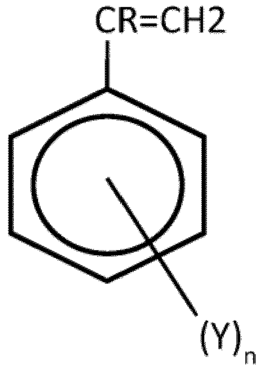

(I)

in der

R Wasserstoff oder eine Methylgruppe ist;
n Null oder eine ganze Zahl zwischen 1 und 3 ist;
Y ausgewählt ist aus einem Halogen, vorzugsweise Chlor oder Brom, einer Chlormethyl-, einer Alkyl- oder einer Alkoxygruppe mit 1 bis 3 Kohlenstoffatomen.

**4.** Zusammensetzung nach Anspruch 3, wobei die vinylaromatischen Monomere der Formel (1) ausgewählt sind aus Styrol, a-Methylstyrol, Methylstyrol, Ethylstyrol, Vinyltoluol-Isomeren, Ethylstyrol-Isomeren, Propylstyrol-Isomeren, Chlorstyrol-Isomeren, Methylchlorstyrol-Isomeren, Methoxystyrol-Isomeren, Acetoxystyrol-Isomeren, Hydroxystyrol-Isomeren, Methylhydroxystyrol-Isomeren und Mischungen davon.

**5.** Zusammensetzung nach Anspruch 3 oder 4, wobei die vinylaromatischen Monomere der allgemeinen Formel (1) allein, in einer Mischung oder in einer Mischung bis zu 35 Gew.-% mit anderen copolymerisierbaren Vinylmonomeren, ausgewählt aus (Meth)acrylsäure, Maleinsäureanhydrid, Alkylestern der (Meth)acrylsäure mit 1 bis 18 Kohlenstoffatomen, Amiden und Nitrilen der (Meth)acrylsäure, verwendet werden können.

**6.** Zusammensetzung nach Anspruch 4, wobei das vinylaromatische Monomer Styrol ist.

**7.** Zusammensetzung nach Anspruch 6, wobei das Styrol zumindest 85 % der Mischung aus vinylaromatischen Monomeren ausmacht, die zur Herstellung des vinylaromatischen Polymers (a) verwendet wird.

**8.** Zusammensetzung nach einem der Ansprüche 3 bis 6, wobei das vinylaromatische Copolymer (c) ein Copolymer ist, das aus zumindest einem vinylaromatischen Monomer gemäß Anspruch 3 hergestellt ist und als dispergierte Phase eine kautschukartige Komponente enthält, die aus Polybutadien, Polyisopren, Copolymeren von Butadien und/oder Isopren mit Styrol oder anderen Vinylmonomeren ausgewählt ist.

**9.** Zusammensetzung nach einem der Ansprüche 1-8, wobei die in dem vinylaromatischen Copolymer (C) dispergierte kautschukartige Komponente Polybutadien (PB) und/oder Styrol-Dien-Blockcopolymere sind.

**10.** Zusammensetzung nach einem der Ansprüche 1-9, wobei das Expansionsmittel (b) in einer Menge von 4 bis 7 Gew.-% vorhanden ist.

11. Zusammensetzung nach einem der Ansprüche 1 -10, wobei das Expansionsmittel (b) ausgewählt ist aus aliphatischen oder cycloaliphatischen Kohlenwasserstoffen mit 3 bis 6 Kohlenstoffatomen, wie n-Pentan, Iso-Pentan, Cyclopentan, Butan, Isobutan und deren Gemischen; oder den halogenierten Derivaten von aliphatischen Kohlenwasserstoffen mit 1 bis 3 Kohlenstoffatomen, wie Dichlordifluormethan, 1,2,2-Trifluorethan und 1,1,2-Trifluorethan, oder Kohlendioxid.

12. Zusammensetzung nach einem der Ansprüche 1-11, aufweisend:

    a) 69 bis 83 Gew.-% eines vinylaromatischen Polymers (a);
    b) von 4 bis 7 Gew.-% eines Expansionsmittels (b);
    c) 13 bis 24 Gew.-% eines vinylaromatischen Copolymers (c), das 3 bis 9 % einer kautschukartigen Komponente als dispergierte Phase enthält;

    unter der Bedingung, dass die Summe aus a), b) und c) 100 Gewichtsprozent beträgt.

13. Zusammensetzung nach Anspruch 12, bestehend aus:

    a) von 69 bis 81 Gew.-% Polystyrol;
    b) von 4 bis 6 Gew.-% eines Expansionsmittels (b);
    c) 15 bis 25 Gew.-% eines Copolymers aus schlagfestem Polystyrol mit 4 bis 9 Gew.-% Polybutadien;

    unter der Bedingung, dass die Summe aus a), b) und c) 100 Gewichtsprozent beträgt.

14. Zusammensetzung nach Anspruch 12, bestehend aus:

    a) 72 bis 79 Gew.-% Polystyrol;
    b) von 4 bis 6 Gew.-% eines Expansionsmittels (b);
    c) 17 bis 22 Gew.-% eines Copolymers aus schlagfestem Polystyrol mit 7 bis 8,5 Gew.-% Polybutadien;

    unter der Bedingung, dass die Summe aus a), b) und c) 100 Gewichtsprozent beträgt.

15. Kontinuierliches Massenverfahren zur Herstellung der Zusammensetzungen nach einem der Ansprüche 1 bis 14, das nacheinander die folgenden Phasen umfasst:

    i. Mischen des vinylaromatischen Polymers (a) und des vinylaromatischen Copolymers (c) in Form von Granulat, Pulver oder bereits im geschmolzenen Zustand,
    ii. falls erforderlich Bringen der Polymermischung, sofern sie sich nicht bereits im geschmolzenen Zustand befindet, auf eine Temperatur, die über dem Schmelzpunkt des vinylaromatischen Polymers (a) und des Copolymers (c) liegt oder diesem entspricht;
    iii. Einarbeiten zumindest eines Expansionsmittels (b) in die geschmolzene Polymermischung, wodurch die vinylaromatische Polymerzusammensetzung nach Anspruch 1 gebildet wird;
    iv. Mischen der so erhaltenen Polymerzusammensetzung mit Hilfe statischer oder dynamischer Mischelemente;
    v. Senden der so erhaltenen Polymerzusammensetzung nach dem Mischen an eine druckbeaufschlagte Stanzplatte.

16. Expandierter Gegenstand, der die Zusammensetzung nach einem der Ansprüche 1 bis 14 aufweist.

## Revendications

1. Composition de polymère vinylique aromatique expansible comprenant :

    a) de 67 % à 88 % en poids d'un polymère vinylique aromatique (a) ;
    b) de 3 % à 8 % en poids d'un agent d'expansion (b) ;
    c) de 9 à 25 % en poids d'un copolymère vinylique aromatique (c) contenant, sous forme de phase dispersée, de 3 à 9 % en poids d'un composant caoutchouteux ;

    à condition que la somme de (a), (b) et (c) soit de 100 % en poids.

**2.** Composition selon la revendication 1, dans laquelle le polymère vinylique aromatique (a) est un polymère obtenu à partir d'au moins 65 % en poids d'un monomère vinylique aromatique.

**3.** Composition selon l'une ou l'autre des revendications 1-2, dans laquelle les monomères vinyliques aromatiques utilisés pour préparer le polymère vinylique aromatique (a) présentent la formule générale (I) :

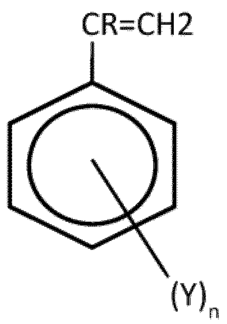

(I)

dans laquelle

R est hydrogène ou un groupe méthyle ;
n est 0 ou un entier allant de 1 à 3 ;
Y est sélectionné parmi un halogène, de préférence chlore ou brome, un chlorométhyle, un groupe alkyle ou un groupe alcoxy présentant de 1 à 3 atomes de carbone.

**4.** Composition selon la revendication 3, dans laquelle les monomères vinyliques aromatiques de la formule (I) sont sélectionnées parmi styrène, α-méthylstyrène, méthylstyrène, éthylstyrène, des isomères vinyle toluène, des isomères éthylstyrène, des isomères propylstyrène, des isomères chlorostyrène, des isomères méthylchlorostyrène, des isomères méthoxystyrène, des isomères acétoxystyrène, des isomères hydroxystyrène, des isomères méthylhydroxystyrène, et des mélanges de ceux-ci.

**5.** Composition selon la revendication 3 ou 4, dans laquelle les monomères vinyliques aromatiques de la formule générale (I) peuvent être utilisés seuls, en mélange ou en mélange pouvant atteindre les 35 % en poids avec d'autres monomères vinyliques copolymérisables sélectionnés parmi l'acide (méth)acrylique, l'anhydride maléique, les esters alkyliques de l'acide (méth)acrylique présentant de 1 à 18 atomes de carbone, les amides et les nitriles de l'acide (méth)acrylique.

**6.** Composition selon la revendication 4, dans laquelle le monomère vinylique aromatique est le styrène.

**7.** Composition selon la revendication 6, dans laquelle le styrène constitue au moins 85 % du mélange de monomères vinyliques aromatiques utilisés pour préparer le polymère vinylique aromatique (a).

**8.** Composition selon l'une quelconque des revendications 3-6, dans laquelle le copolymère vinylique aromatique (c) est un copolymère produit à partir d'au moins un monomère vinylique aromatique tel que défini en revendication 3 contenant, sous forme de phase dispersée, un composant caoutchouteux sélectionné parmi le polybutadiène, le polyisoprène, des copolymères de butadiène et/ou d'isoprène avec du styrène ou d'autres monomères vinyliques.

**9.** Composition selon l'une quelconque des revendications 1-8, dans laquelle le composant caoutchouteux dispersé dans le copolymère vinylique aromatique (C) est le polybutadiène (PB) et/ou des copolymères séquencés styrène-diène.

**10.** Composition selon l'une quelconque des revendications 1-9, dans laquelle l'agent d'expansion (b) est présent en une quantité allant de 4 à 7 % en poids.

**11.** Composition selon l'une quelconque des revendications 1-10, dans laquelle l'agent d'expansion (b) est sélectionné parmi des hydrocarbures aliphatiques ou cyclo-aliphatiques contenant de 3 à 6 atomes de carbone, tels que le n-pentane, l'iso-pentane, le cyclopentane, le butane, l'isobutane et leurs mélanges ; ou les dérivés halogénés d'hydrocarbures aliphatiques contenant de 1 à 3 atomes de carbone, tels que le dichlorodifluorométhane, le 1,2,2-trifluoroéthane et le 1,1,2-trifluoroéthane ; ou le dioxyde de carbone.

**12.** Composition selon l'une quelconque des revendications 1-11, comprenant :

a) de 69 à 83 % en poids d'un polymère vinylique aromatique (a) ;
b) de 4 % à 7 % en poids d'un agent d'expansion (b) ;
c) de 13 % à 24 % en poids d'un copolymère vinylique aromatique (c) contenant de 3 % à 9 % d'un composant caoutchouteux sous forme de phase dispersée ;

à condition que la somme de (a), (b) et (c) soit de 100 % en poids.

**13.** Composition selon la revendication 12, consistant en :

a) de 69 à 81 % en poids de polystyrène ;
b) de 4 % à 6 % en poids d'un agent d'expansion (b) ;
c) de 15 à 25 % en poids d'un copolymère constitué de polystyrène résistant aux chocs contenant de 4 à 9 % en poids de polybutadiène ;

à condition que la somme de (a), (b) et (c) soit de 100 % en poids.

**14.** Composition selon la revendication 12, consistant en :

a) de 72 à 79 % en poids de polystyrène ;
b) de 4 % à 6 % en poids d'un agent d'expansion (b) ;
c) de 17 à 22 % en poids d'un copolymère constitué de polystyrène résistant aux chocs contenant de 7 à 8,5 % en poids de polybutadiène ;

à condition que la somme de (a), (b) et (c) soit de 100 % en poids.

**15.** Procédé en vrac continu de préparation de compositions selon l'une quelconque des revendications 1 à 14, qui comprend les étapes suivantes en séquences :

i. le mélange d'un polymère vinylique aromatique (a) et du copolymère vinylique aromatique (c) sous forme de granulés, de poudre ou déjà à l'état fondu,
ii. si nécessaire, s'il n'est pas déjà à l'état fondu, le fait de porter le mélange polymère à une température supérieure ou égale au point de fusion du polymère vinylique aromatique (a) et du copolymère (c) ;
iii. l'incorporation d'au moins un agent d'expansion (b) dans le mélange polymère fondu, formant la composition de polymère vinylique aromatique en revendication 1 ;
iv. le mélange de la composition de polymère ainsi obtenue au moyen d'éléments de mélange statiques ou dynamiques ;
v. l'envoi de la composition de polymère ainsi obtenue après mélange vers un plateau matrice de coupe sous pression.

**16.** Article expansé comprenant la composition selon l'une quelconque des revendications 1 à 14.

Figure 1

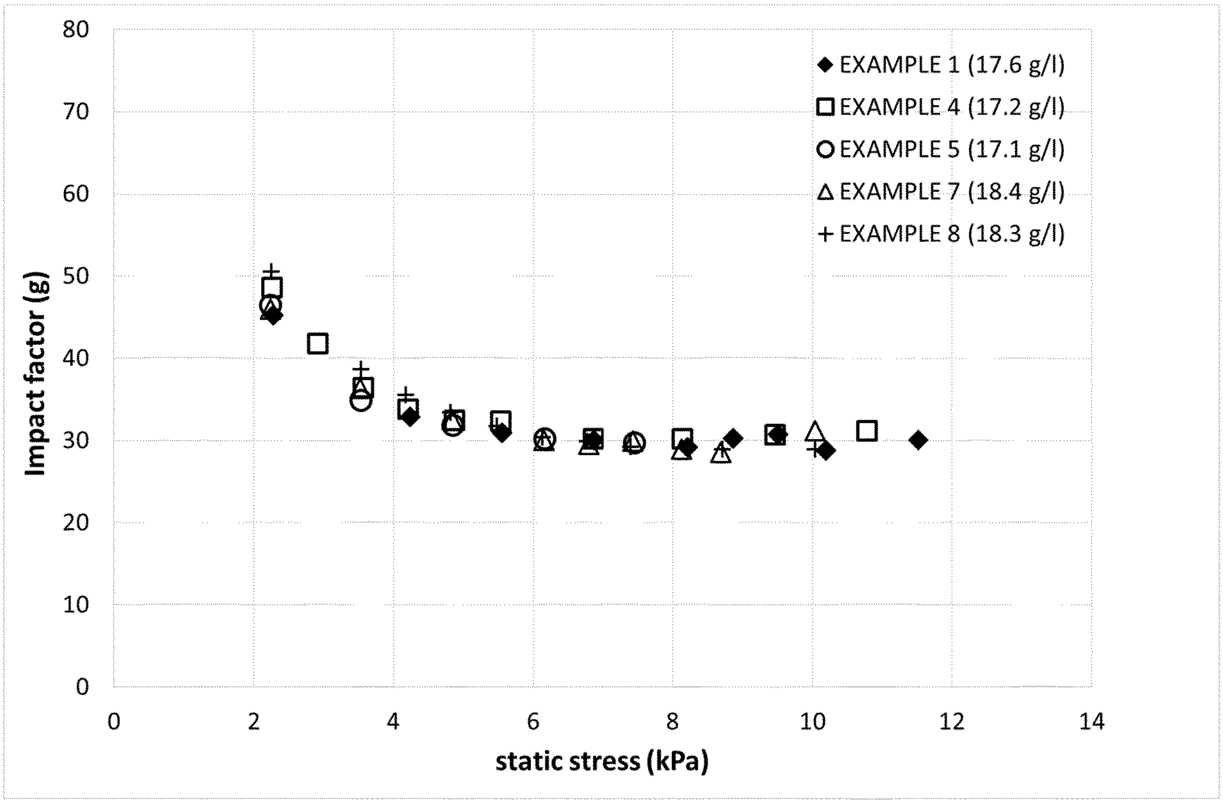
Impact factor (g)
80
70
60
50
40
30
20
10
0
0
2
4
6
8
10
12
14
static stress (kPa)
EXAMPLE 1 (17.6 g/l)
EXAMPLE 4 (17.2 g/l)
EXAMPLE 5 (17.1 g/l)
EXAMPLE 7 (18.4 g/l)
EXAMPLE 8 (18.3 g/l)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6232358 B
- EP 0722974 A
- EP 1266929 A
- DE 19710442
- US 5166221 A
- EP 0425973 A
- EP 0872513 A
- WO 1994025516 A
- US 3558534 A
- JP 2004115690 B
- EP 1541621 A
- US 7320585 B
- US 20050123638 A

### Non-patent literature cited in the description

- **PAUL GABBOTT.** Principles and applications of Thermal Analysis. Blackwell Publishing Ltd, 2008